# EUROPÄISCHE PATENTANMELDUNG

(11) **EP 3 395 511 A1**
(43) Veröffentlichungstag der Anmeldung: **31.10.2018**
(21) Anmeldenummer: 18168958.9
(22) Anmeldetag: 24.04.2018
(51) Int. Cl.: B25J 15/00, B65H 3/22

(54) **NADELGREIFER ZUR HANDHABUNG VON WERKSTÜCKEN MITTELS GREIFNADELN**

(30) Priorität: 28.04.2017 DE 102017109155; 08.06.2017 DE 102017209661
(71) Anmelder: Albrecht Bäumer GmbH & Co. KG Spezialmaschinenfabrik, 57258 Freudenberg (DE)
(72) Erfinder: Bertelmann, Philip, 57074 Siegen (DE)
(74) Vertreter: Grosse, Wolf-Dietrich Rüdiger

(57) **Zusammenfassung**

Die Erfindung betrifft einen Nadelgreifer (1) zur Handhabung von Werkstücken mittels Greifnadeln (3), insbesondere von Schaumstoffplatten, mit einem Greifergehäuse (4), einer Greiffläche (6) und mehreren Greifnadeln (3), die gegenüber der Greiffläche (6) zwischen einer Freigabeposition und einer Greifposition verfahrbar sind. Eine erste Anzahl von Greifnadeln (3) ist in einer ersten Ausrichtung und eine zweite Anzahl von Greifnadeln (3) in einer zweiten Ausrichtung mit einem von der ersten Ausrichtung abweichenden Winkel angeordnet und verlagerbar. Die Greifnadeln (3) ragen im ausgefahrenen Zustand aus der Greiffläche (6) und dringen zur Erfassung der Werkstücke in diese ein. Im eingefahrenen Zustand sind sie in die Greiffläche (6) eingezogen und geben die Werkstücke frei. Erfindungsgemäß ist der Nadelgreifer (1) balkenförmig ausgebildet und weist je einen verfahrbaren Nadelträger (2) für die Greifnadeln (3) beider Ausrichtungen auf, die in je einem Führungssystem (10, 11) gleitend gehalten sind. Die Nadelträger (2) sind von einem Servoantrieb (12) über ein Verteilergetriebe (13) in ihren jeweiligen Ausrichtungen synchron zueinander verfahrbar.

## Beschreibung

Die Erfindung betrifft einen Nadelgreifer zur Handhabung von Werkstücken mittels Greifnadeln, insbesondere von Schaumstoffplatten, mit einem Greifergehäuse, einer Greiffläche und mehreren Greifnadeln, die gegenüber der Greiffläche zwischen einer Freigabeposition und einer Greifposition verfahrbar sind, wobei eine erste Anzahl von Greifnadeln in einer ersten Ausrichtung und eine zweite Anzahl von Greifnadeln in einer zweiten Ausrichtung mit einem von der ersten Ausrichtung abweichenden Winkel angeordnet und verlagerbar ist und wobei die Greifnadeln im ausgefahrenen Zustand aus der Greiffläche ragen und zur Erfassung der Werkstücke in diese eindringen sowie im eingefahrenen Zustand in die Greiffläche eingezogen sind und die Werkstücke freigeben.

Sogenannte Nadelgreifer sind vorzugsweise mit einer Vielzahl von Greifnadeln ausgestattete Vorrichtungen, welche zum Erfassen von Werkstücken aus einer Greiffläche oder einem Greifergehäuse ein- und ausfahrbar sind. Solche Nadelgreifer finden insbesondere Verwendung, um großformatige Gewebe, Schaumstoffplatten, Faserwerkstoffe, Faserverbundwerkstoffe oder sonstige von Nadeln durchdringbare Werkstoffe zu ergreifen. Nadelgreifer finden insbesondere auch Verwendung, um lagenweise derartige Werkstücke von einem Werkstückstapel zum Zwecke einer Vereinzelung aufzunehmen.

Aus der DE 10 2014 219 719 A1 sind ein Nadelgreifer und mehrere im Verbund angeordnete Nadelgreifer bekannt. Dabei sind drei Nadelgreifer gemeinsam an einem Rahmen angebracht und können somit jeweils gemeinsam bewegt werden. Die Nadelgreifer weisen eine Basis auf, an der Schlitten mittels Kolben translativ verfahrbar angebracht sind. Diese Schlitten weisen jeweils einen Nadelträger auf, an welchem die Greifnadeln des Nadelgreifers mit ihren proximalen Enden befestigt sind. Die distalen Enden der Greifnadeln ragen in Führungskanäle eines Nadelführungsblockes als Hauptbestandteil einer Nadelführungsvorrichtung. Durch pneumatische Bewegung der Schlitten des Nadelgreifers können die Greifnadeln aus ihrem jeweils eingefahrenen Zustand in ihren ausgefahrenen Zustand überführt werden, in welcher sie in ihrer jeweiligen unterschiedlichen Ausrichtung in das Werkstück eindringen und dieses somit erfassen.

In der WO 2015/049141 A1 ist ein Nadelgreifer mit einer Greifeinheit beschrieben, die eine dem zu greifenden Werkstück zugewandte Greiffläche und wenigstens einen Nadelschlitten mit zumindest einer Greifnadel aufweist. Der wenigstens eine Nadelschlitten ist von einer passiven Stellung, in welcher die Greifnadel zurückgezogen ist, in eine aktive Stellung verfahrbar, in welcher die Greifnadel um eine Nadelhubtiefe über die Greiffläche ausgefahren ist. Der Nadelgreifer ist weiterhin mit einer pneumatisch oder elektrisch angetriebenen Antriebseinheit mit einem entlang einer Antriebsrichtung vor- und rückfahrbaren Antriebsaktor versehen, der der den Nadelschlitten in die passive Stellung oder die aktive Stellung verschiebt. Eine Einstelleinrichtung bewirkt eine Veränderung der Nadelhubtiefe, welche einen senkrecht zur Antriebsrichtung entlang einer Führungsrichtung verlagerbaren Führungsschlitten sowie einen Anschlag für den Führungsschlitten aufweist, wobei der Antriebsaktor mittels eines Verbindungsarmes derart mit dem Führungsschlitten bewegungsgekoppelt ist, dass dieser bei Rückfahren des Antriebsaktors in Richtung gegen den Anschlag bewegt wird und ein weiteres Rückfahren des Antriebsaktors unterbunden ist.

Die DE 20 2011 110 569 U1 offenbart eine elektrisch angetriebene Vorrichtung zum Greifen von Werkstücken mittels mehrerer Nadeln, wobei über einen Kulissenantrieb nur eine kleine Anzahl von Nadeln antreibbar sind. Um größere Gegenstände greifen zu können müssen mehrere Vorrichtungen zum Greifen parallel angeordnet werden.

Die bekannten Nadelgreifsysteme erfordern eine große Anzahl von Einzelgreifern, die dann, um großflächig Schaumstoffplatten zu ergreifen, wiederum mit sehr hohem Aufwand zu montieren, installieren und justieren sind. Bei pneumatisch arbeitenden Nadelgreifern ist üblicherweise nur eine Einstichlänge zu realisieren. Bei pneumatischen Anwendungen wären beispielsweise zwei Einstichlängen durch eine Kombination zweier Pneumatikzylindern zwar möglich, aber sehr aufwändig.

Die Erfindung geht von der Aufgabe aus, einen Nadelgreifer der eingangs genannten Art derart auszubilden, dass auf einfache Weise großflächige Schaumstoffplatten unterschiedlicher Dicke ergriffen und dann wiederum passgenau beispielsweise zu einer Matratze zusammengeführt werden können.

Die Aufgabe wird erfindungsgemäß für einen Nadelgreifer der eingangs genannten Art durch die im Patentanspruch 1 angegebenen Merkmale gelöst. Vorteilhafte Ausbildungen sind in den abhängigen Patentansprüchen angegeben.

Die Aufgabe wird erfindungsgemäß dadurch gelöst, dass der Nadelgreifer balkenförmig, mit gegenüber seiner in Richtung der sich gegenüberstehenden, unterschiedlich ausgerichteten Greifnadeln erstreckenden Tiefe größeren Breite ausgebildet ist, und je einen verfahrbaren Nadelträger für mindesten drei nebeneinander angeordneten, voneinander beabstandete Greifnadeln beider Ausrichtungen aufweist, wobei jeder Nadelträger in wenigstens zwei Führungen gleitende Führungswagen aufweist, und die Führungswagen von einem Servoantrieb über ein Verteilergetriebe in ihren jeweiligen Ausrichtungen synchron zueinander antreibbar sind.

Dadurch erhält man einen einfach aufgebauten und leicht zu betreibenden Nadelgreifer mit einer variablen Einstichlänge der Greifnadeln, der schon größere Lasten zu greifen vermag, von denen sich aber auch mehrere leicht zu einem noch größeren Greifer zusammensetzen lassen, der auch schwerere Lasten zu tragen vermag.

Von Vorteil ist, wenn die Breite des Nadelgreifers mindestens doppelt so groß, vorzugsweise mindestens drei mal so groß, höchst vorzugsweise mindesten sieben mal so groß ist wie dessen Tiefe. Damit lassen sich dann schon große Breiten z.B. von Schaumstoff greifen. Weist der Schaumstoff zusätzlich noch eine große Länge auf, können mehrere erfindungsgemäße Nadelgreifer gleichzeitig Anwendung finden.

Es hat sich als vorteilhaft erwiesen, wenn das Greifergehäuse eine Gehäuseoberseite, eine Greiffläche als Gehäuseunterseite, Längsverbindungsteile als Seitenteile des Greifergehäuses und als Gehäuseabschlüsse eine antriebsseitige erste Lagerplatte sowie eine zweite Lagerplatte aufweist.

Nachahmenswert ist, dass das Verteilergetriebe ein Zahnstangengetriebe ist.

Vorteilhaft ist, dass die Nadelträger an beiden Seiten mit Zahnstangen versehen sind, in die abtreibende Zahnräder des Verteilergetriebes eingreifen.

In vorteilhafter Weise können die Führungssysteme Führungen aufweisen, die an den, die zwei Lagerplatten verbindenden Längsverbindungsteilen des Greifergehäuses befestigt sind, und dass die Nadelträger an den Führungswagen angebracht sind, die in den Führungen gleitend gehalten sind.

Es empfiehlt sich, um eine erfindungsgemäße Begrenzung des Hubs der Nadelträger mit den Führungswagen in den Führungen zu erreichen, wenn ein Festanschlag an den Längsverbindungsteilen angebracht ist, der das synchrone Auf- oder Rückfahren in die Freigabeposition der Nadelträger begrenzt.

In vorteilhafter Weise können mehrere Nadelgreifer hintereinander und/oder nebeneinander in einem Nadelgreifersystem angeordnet sein, wobei sie an einem gemeinsamen Rahmen befestigt sein können.

Bemerkenswert ist, wenn wenigstens ein Nadelgreifer an einem Roboterarm oder Linearportal angebracht ist.

Die Erfindung ist nachfolgend anhand eines in der Zeichnung dargestellten Ausführungsbeispiels näher erläutert. Es zeigen:
- Figur 1: einen erfindungsgemäßen balkenförmigen Nadelgreifer und
- Figur 2: einen Schnitt A-A durch den Nadelgreifer gemäß Figur 1.

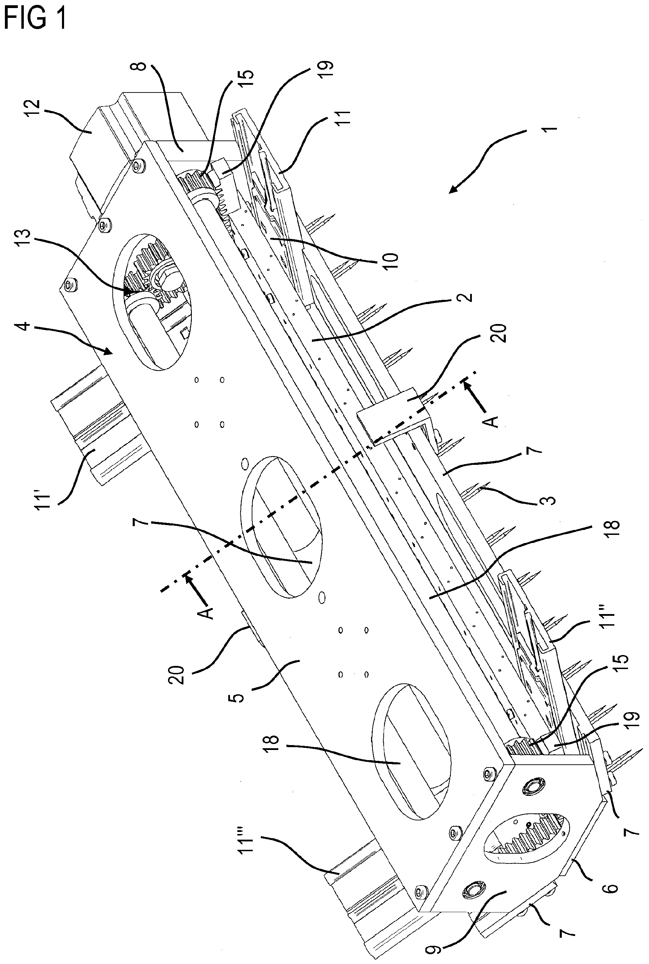

In der Figur 1 ist ein balkenförmiger Nadelgreifer 1 zur Erfassung und Handhabung von weichen verformbaren Werkstücken, insbesondere von Schaumstoffplatten oder -blöcken, mittels einer Vielzahl von an zwei Nadelträgern 2 angebrachten Greifnadeln 3 innerhalb eines Greifergehäuses 4 dargestellt. Das Greifergehäuse 4 weist eine Gehäuseoberseite 5, eine Greiffläche 6 als Gehäuseunterseite, Längsverbindungsteile 7 als Seitenteile des Greifergehäuses 4 und als Gehäuseabschlüsse eine antriebsseitige Lagerplatte 8 sowie eine zweite Lagerplatte 9 auf.

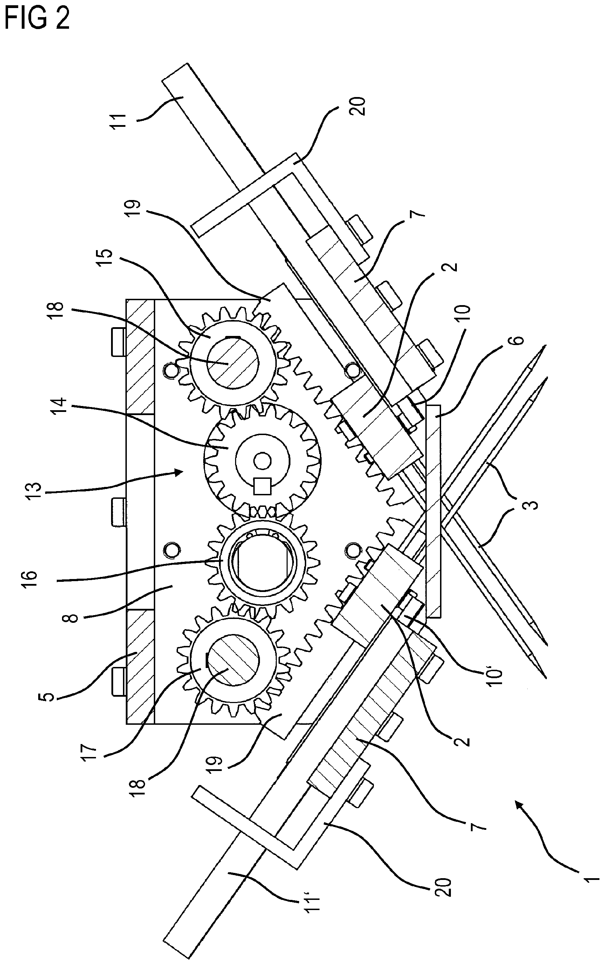

Die Nadelträger 2 sind derart angeordnet, dass die Greifnadeln 3 in einem Winkel von 90° oder mehr, beispielsweise 110°, aufeinander ausgerichtet sind und im dargestellten ausgefahrenen Zustand aus der Greiffläche 6 ragen, wie dies insbesondere der Figur 2 zu entnehmen ist und nachfolgend noch genauer beschrieben wird. Die Nadelträger 2 sind beidseitig mittels je zweier Führungssysteme von Führungswagen 10 und Führungen 11 gleitend gehalten, die an den die zwei Lagerplatten 8 und 9 verbindenden Längsverbindungsteilen 7 des Greifergehäuses 4 befestigt sind.

An der antriebsseitigen Lagerplatte 8 ist ein regelbarer Antrieb, beispielsweise ein Servoantrieb 12 bestehend aus einem Servomotor oder einer Servomotor-Getriebekombination, angebracht, der in Wirkverbindung mit einem Verteilergetriebe 13 steht. Das an der Innenseite der antriebsseitigen Lagerplatte 8 angebrachte, in der Figur 2 genauer dargestellte Verteilergetriebe 13 weist ein mit der Antriebsachse des Servoantrieb 12 verbundenes Antriebsritzel 14 als antreibendes Zahnrad auf. Dieses Antriebsritzel 14 wirkt direkt auf ein erstes abtreibendes Zahnrad 15 und über ein Zwischenzahnrad 16, welches die Drehrichtung umkehrt, auf ein zweites abtreibendes Zahnrad 17. Die abtreibenden Zahnräder 15 und 17 sind durch zwei Wellen 18 zur Synchronisierung mit zwei weiteren abtreibenden Zahnrädern 15 und 17 verbunden, die an der zweiten Lagerplatte 9 angeordnet und drehbar gelagert sind. Die Zahnräder 15 und 17 greifen in an den Nadelträgern 2 angebrachten Zahnstangen 19 ein, die an den, den Lagerplatten 8 und 9 zugewandten Enden der Nadelträger 2 befestigt sind.

Die Figur 2 zeigt den Querschnitt des balkenförmigen Nadelgreifers 1 entlang der Schnittlinie A-A der Figur 1, aus der weitere Details erkenntlich sind, die z.T. bereits im Zusammenhang mit der Figur 1 beschrieben wurden. Die Greifnadeln 3 befinden sich in der aktiven Stellung, der Greifposition, d.h. sie ragen weit aus der Greiffläche 6 heraus und hätten in ein unterhalb der Greiffläche 6 anliegendes Werkstück eindringen können, um es zu arretieren. Die Greiffläche 6 dient in der unteren Position der Nadelträger 2 als Endanschlag, damit deren Herausfahren aus der Linearführung 11 verhindert wird. Weiterhin dient die Greiffläche 6 als Anschlag, um die Antriebe zu referenzieren, d.h. die Position der Greifnadeln 3 für die Steuerung zu bestimmen und festzuhalten. Die Einstechtiefe in das zu greifende Werkstück ist dabei abhängig von dessen Dicke und wird durch entsprechende Ansteuerung des Servoantrieb 12 sichergestellt.

Durch diese Ansteuerung des an der antriebsseitigen Lagerplatte 8 angebrachten Servoantrieb 12 lassen sich die Nadelträger 2 mit den Führungswagen 10 in den Führungen 11 auf und ab synchron verfahren. Somit können die an den Nadelträgern 2 angebrachten Greifnadeln 3 aus der in Figur 2 dargestellten aktiven Stellung, der Greifposition, in eine passive Stellung, der Freigabeposition, verfahren werden, bei der die Greifnadeln 3 alle hinter der Greiffläche 6 zurückgezogen sind. Dazu dreht der Servoantrieb 12 das Antriebsritzel 14 im Uhrzeigersinn, worauf sich das erste abtreibende Zahnrad 15 entgegen dem Uhrzeigersinn dreht. Dadurch wird die Zahnstange 19 nach oben bewegt, so dass die damit verbundenen Nadelträger 2, Greifnadeln 3 und Führungswagen 10 in die Freigabeposition fahren. Die Welle 18 überträgt dabei die Bewegung auf ein an der zweiten Lagerplatte 9 angeordnetes abtreibendes Zahnrad 15, das die Bewegung unterstützt und dafür sorgt, dass der Nadelträger 2 sich nicht verbiegt oder verzieht. Ein Festanschlag 20 begrenzt das synchrone Auf- oder Rückfahren in die Freigabeposition von den Nadelträgern 2 mit den Führungswagen 10 in den Führungen 11.

Auf der anderen Seite wird durch Drehung des Antriebsritzels 14 im Uhrzeigersinn das Zwischenrad 16 entgegen dem Uhrzeigersinn gedreht, worauf das zweite abtreibende Zahnrad 17 sich wieder im Uhrzeigersinn bewegt. Dadurch wird die Zahnstange 19 ebenfalls nach oben bewegt, so dass die damit verbundenen Nadelträger 2, Greifnadeln 3 und Führungswagen 10 synchron in die Freigabeposition fahren. Das Zwischenrad 16 ist erforderlich, da sonst abweichende Bewegungen der Nadeln auftreten würden. Auch hier wird die Bewegung durch eine Welle 18 unterstützt, die die Bewegung auf ein an der zweiten Lagerplatte 9 angeordnetes abtreibendes Zahnrad 15 überträgt.

Mit einem derartigen balkenförmigen Nadelgreifer 1 lassen sich weiche verformbare Werkstücke leicht erfassen und handeln. So können großflächig Schaumstoffplatten ergriffen werden, die dann wiederum passgenau u.a. zu einer Matratze zusammengeführt werden. Sind nun größere oder schwerere Werkstücke zu bearbeiten, können auf einfache Weise mehrere balkenförmige Nadelgreifer 1 an einem Rahmen befestigt und als Nadelgreifersysteme oder sogenannte Nadelgreifer- oder Linearportale eingesetzt werden. Sie können aber auch an Robotern montiert werden, um die Schaumstoffplatten dem jeweils zugeordneten Ziel zu transportieren.

Der Vorteil dieser Nadelgreiferbalken 1 ist das Verfahren vieler Greifnadeln 3 an zwei Nadelträgern 2 oder Balken mit nur einem Servoantrieb 12. Hierbei werden die Greifnadeln 3 über Kreuz in den Schaumstoff eingesteckt, um die Schaumstoffplatten festzuhalten. Die Antriebsleistung eines Servoantrieb 12 und deren Verteilung werden über Zahnräder 14 bis 17 des Verteilergetriebes 13 und Wellen 18 zur Synchronisierung getätigt. Gegenüber pneumatischen Lösungen können die Einstechtiefen frei von einer übergeordneten Steuerung entsprechend den zu greifenden Plattendicken eingestellt werden. Somit wird vermieden, dass zwei oder mehrere Platten gleichzeitig aufgenommen werden.

Zusammenfassend ist festzustellen, dass durch die vorliegende erfindungsgemäße balkenförmige Ausbildung der Nadelgreifer 1 sich auf einfache Weise Schaumstoffplatten großflächig ergreifen lassen. Weiterhin lassen sich die balkenförmigen Nadelgreifer 1 sehr einfach zu größeren Greifern zusammenbauen. So können erfindungsgemäß auch beispielsweise neun Nadelgreiferbalken zu einem Gesamtgreifer zusammengefasst werden, der mit einem Linearportal oder Roboter mit den Gehäuseunterseiten der neun Nadelgreiferbalken auf die zu greifende Schaumstoffplatte aufgelegt wird. Mit dem Servoantrieb 12, dem Verteilergetriebe 13 und dem Zahnradantrieb rechts und links mit jeweils zwei Zahnstangen 19 pro Nadelträger 2 mit Greifnadeln 3 werden diese in die Schaumstoffplatte eingestochen. Die Einstechtiefe ist abhängig von der zu greifenden Plattendicke und wird durch entsprechende Ansteuerung des Servoantrieb 12 sichergestellt.

Nach Aufnahme der Schaumstoffplatte und dem Ablegen am vorgegebenen Ablageplatz werden die Greifnadeln 3 mit Hilfe der beiden Nadelträger 2 wieder aus der Schaumstoffplatte herausgezogen. Die Greifflächen 6 der Gehäuseunterseiten der Nadelgreifer 1 dienen hierbei als Gegenhalter, damit die Greifnadeln 3, ohne die Schaumstoffplatte wieder anzuheben, aus dieser herausgezogen werden können.

### Bezugszeichenliste

- 1: balkenförmiger Nadelgreifer
- 2: Nadelträger
- 3: Greifnadeln
- 4: Greifergehäuse
- 5: Gehäuseoberseite
- 6: Greiffläche als Gehäuseunterseite
- 7: Längsverbindungsteile
- 8: antriebsseitige Lagerplatte
- 9: zweite Lagerplatte
- 10: Führungswagen
- 11: Führungen
- 12: Servoantrieb
- 13: Verteilergetriebe
- 14: Antriebsritzel
- 15: erstes abtreibendes Zahnrad
- 16: Zwischenrad
- 17: zweites abtreibendes Zahnrad
- 18: Wellen
- 19: Zahnstange - Zahnradantrieb rechts -
- 20: Festanschlag

## Patentansprüche

1. Nadelgreifer (1) zur Handhabung von Werkstücken mittels Greifnadeln (3), insbesondere von Schaumstoffplatten,
mit einem Greifergehäuse (4), einer Greiffläche (6) und mehreren Greifnadeln (3), die gegenüber der Greiffläche (6) zwischen einer Freigabeposition und einer Greifposition verfahrbar sind,
wobei eine erste Anzahl von Greifnadeln (3) in einer ersten Ausrichtung und eine zweite Anzahl von Greifnadeln (3) in einer zweiten Ausrichtung mit einem von der ersten Ausrichtung abweichenden Winkel angeordnet und verlagerbar ist und
wobei die Greifnadeln (3) im ausgefahrenen Zustand aus der Greiffläche (6) ragen und zur Erfassung der Werkstücke in diese eindringen sowie im eingefahrenen Zustand in die Greiffläche (6) eingezogen sind und die Werkstücke freigeben,
**dadurch gekennzeichnet,**
**dass** der Nadelgreifer (1) balkenförmig, mit gegenüber seiner in Richtung der sich gegenüberstehenden, unterschiedlich ausgerichteten Greifnadeln erstreckenden Tiefe größeren Breite ausgebildet ist, und je einen verfahrbaren Nadelträger (2) für mindesten drei nebeneinander angeordneten Greifnadeln (3) beider Ausrichtungen aufweist, wobei jeder Nadelträger (2) in wenigstens zwei Führungen (11, 11'; 11", 11'") gleitende Führungswagen (10, 10'; 10", 10'") aufweist, und die Führungswagen von einem Servoantrieb (12) über ein Verteilergetriebe (13) in ihren jeweiligen Ausrichtungen synchron zueinander antreibbar sind.

2. Nadelgreifer (1) nach Anspruch 1,
**dadurch gekennzeichnet,**
**dass** die Breite des Nadelgreifers (1) mindestens doppelt so groß, vorzugsweise mindestens drei mal so groß, höchst vorzugsweise mindesten sieben mal so groß ist wie dessen Tiefe.

3. Nadelgreifer (1) nach Anspruch 1 oder 2,
**dadurch gekennzeichnet,**
**dass** das Greifergehäuse (4) eine Gehäuseoberseite (5), eine Greiffläche (6) als Gehäuseunterseite, Längsverbindungsteile (7) als Seitenteile des Greifergehäuses (4) und als Gehäuseabschlüsse eine antriebsseitige erste Lagerplatte (8) sowie eine zweite Lagerplatte (9) aufweist.

4. Nadelgreifer (1) nach einem der Ansprüche 1 bis 3,
**dadurch gekennzeichnet,**
**dass** das Verteilergetriebe (13) ein Zahnstangengetriebe aufweist.

5. Nadelgreifer (1) nach einem der Ansprüche 1 bis 4,
**dadurch gekennzeichnet,**
**dass** die Nadelträger (2) beidendig mit Zahnstangen (19) versehen sind, in die abtreibende Zahnräder (15, 17) des Verteilergetriebes (13) eingreifen.

6. Nadelgreifer (1) nach einem der Ansprüche 3 bis 5,
**dadurch gekennzeichnet,**
**dass** die Führungen (11, 11'; 11", 11'") an den, die zwei Lagerplatten (8, 9) verbindenden Längsverbindungsteilen (7) des Greifergehäuses (4) befestigt sind, und dass die Nadelträger (2) an den Führungswagen (10, 10' ; 10", 10'") angebracht sind, die in den Führungen (11, 11'; 11", 11'") gleitend gehalten sind.

7. Nadelgreifer (1) nach einem der Ansprüche 3 bis 6,
**dadurch gekennzeichnet,**
**dass** ein Festanschlag (20) an den Längsverbindungsteilen (7) angebracht ist, der das synchrone Auf- oder Rückfahren in die Freigabeposition der Nadelträger (2) mit den Führungswagen (10, 10'; 10", 10'") in den Führungen (11, 11'; 11", 11'") begrenzt.

8. Nadelgreifer (1) nach einem der Ansprüche 1 bis 7,
**dadurch gekennzeichnet,**
**dass** mehrere Nadelgreifer (1) hintereinander und/oder nebeneinander in einem Nadelgreifersystem angeordnet sind.

9. Nadelgreifer (1) nach einem der Ansprüche 1 bis 8,
**dadurch gekennzeichnet,**
**dass** mehrere Nadelgreifer (1) an einem gemeinsamen Rahmen befestigt sind.

10. Nadelgreifer (1) nach einem der Ansprüche 1 bis 9,
**dadurch gekennzeichnet,**
**dass** wenigstens ein Nadelgreifer (1) an einem Roboterarm oder Linearportal angebracht ist.
